Europäisches Patentamt

European Patent Office

Office européen des brevets

(11) Publication number: **0 220 628 B1**

## (12) EUROPEAN PATENT SPECIFICATION

(45) Date of publication of patent specification: **23.09.92**  (51) Int. Cl.⁵: **F16C 17/08**, F16C 33/10

(21) Application number: **86114421.0**

(22) Date of filing: **17.10.86**

(54) **Thrust bearing.**

(30) Priority: **22.10.85 JP 235891/85**
          **17.01.86 JP 6557/86**

(43) Date of publication of application:
   **06.05.87 Bulletin  87/19**

(45) Publication of the grant of the patent:
   **23.09.92 Bulletin  92/39**

(84) Designated Contracting States:
   **DE GB IT NL SE**

(56) References cited:
   **DE-A- 2 612 252      FR-A- 2 152 023**
   **FR-A- 2 254 733      US-A- 3 682 518**
   **US-A- 3 746 407      US-A- 4 346 946**

(73) Proprietor: **EBARA CORPORATION**
   **11-1, Haneda Asahi-cho**
   **Ota-ku Tokyo, 144(JP)**

(72) Inventor: **Mizobuchi, Shotaro**
   **2-20-401, Satsukicho**
   **Ebina-shi Kanagawa-ken(JP)**
   Inventor: **Kimura, Yoshikazu**
   **4679-8, Kamiiidacho Totsuka-ku**
   **Yokohama-shi Kanagawa-ken(JP)**
   Inventor: **Sasaki, Katsumi**
   **753, Nishikoiso Oisomachi**
   **Naka-gun Kanagawa-ken(JP)**
   Inventor: **Kanamori, Toshiya**
   **c/o EBARA RESEARCH CO., LTD. 4720**
   **Fujisawa**
   **Fujisawa-shi Kanagawa-ken(JP)**
   Inventor: **Chiba, Katsutoshi**
   **c/o EBARA RESEARCH CO., LTD. 4720**
   **Fujisawa**
   **Fujisawa-shi Kanagawa-ken(JP)**

(74) Representative: **Wagner, Karl H. et al**
   **WAGNER & GEYER Patentanwälte Gewürz-**
   **mühlstrasse 5 Postfach 246**
   **W-8000 München 22(DE)**

## Description

The present invention relates to a thrust bearing set forth in the preamble of claim 1.

A type of thrust bearing has been known in which a bearing member having spiral grooves is employed to bear against a flat member such as to suspend a thrust load by the fluid dynamic pressure produced between the flat member and the surface of the other member having the spiral grooves when the two members are caused to rotate relative to each other. Examples of such bearings are disclosed in US-A-3,918,773 and US-A-4,575,264.

The bearings shown in these U.S. Patents exhibit satisfactory functions. However, in these bearings, means for bearing some radial load is required since they do not bear the radial load. If means for preventing radial displacement between the two members is not provided, either of the members may radially shift in the direction normal to the rotating shaft.

If an arrangement is adopted in which a radial bearing or bearings is employed in addition to the thrust bearing of the above type, such provision may result in increasing the total volume of the whole device. On the other hand, if the members constituting the thrust bearing are planned to have spherical surfaces, conical surfaces or frusto-conical surfaces at the interface between the two members for preventing relative radial displacement therebetween and for withstanding radial load, the process for producing such surfaces and providing spiral grooves on the same while maintaining strict tolerances would become difficult and expensive work. Provision of additional radial bearing(s) would also be expensive if the expected radial load is relatively small. If the tolerances for the member having spiral grooves and the opposing member are not maintained as required, the function of the bearing would be inferior or it would fail to perform at all. Hence such attempts at employing such non-flat surfaces as above have not been feasible.

Accordingly, it has been desired to have a thrust bearing comprising a member having spiral grooves on a flat surface and an opposing member having a flat surface opposing the spiral grooves wherein some radial load between the two members is supported. FR-A-2152023 discloses a thrust bearing of this type as set forth in the preamble of claim 1.

It is an object of the present invention to provide a thrust bearing of the type provided with spiral grooves on a flat surface of one of the bearing members, the spiral grooves being arranged to oppose a flat surface of the other member, the thrust bearing also withstanding some radial load.

The above object is accomplished according to the present invention wherein an aligning means for maintaining alignment between the spiral member and opposing member is provided centrally inside of the annular zone where a pattern of spiral grooves is provided, said aligning means comprising magnet pieces embedded in the opposing surfaces, such as to exhibit interacting magnetic force between opposing members, centrally in each of the opposing surfaces. Further embodiments of the invention are disclosed in the dependent claims.

The present invention will become more clear from reading the following description regarding the preferred embodiments, referring to the accompanying drawings, a brief explanation of the latter being summarized below.

Fig. 1 is a side view, partially in cross section, of an embodiment according to the present invention;

Fig. 2 is a plan view of a spiral pattern employed in the embodiment shown in Fig. 1;

Fig. 3 is a side view of a second embodiment;

Fig. 4 is a plan view of a surface having a spiral pattern employed in the second embodiment;

Fig. 5 is a side view, partially in cross section, of a third embodiment;

Fig. 6 and Fig. 7 show a plan view each of the opposing surfaces of an intermediate disc member disposed between a rotatable member and a stationary member of the third embodiment;

Fig. 8 is a cross-sectional view of a detail of a fourth embodiment;

Fig. 9 shows a spirally patterned surface of the fourth embodiment;

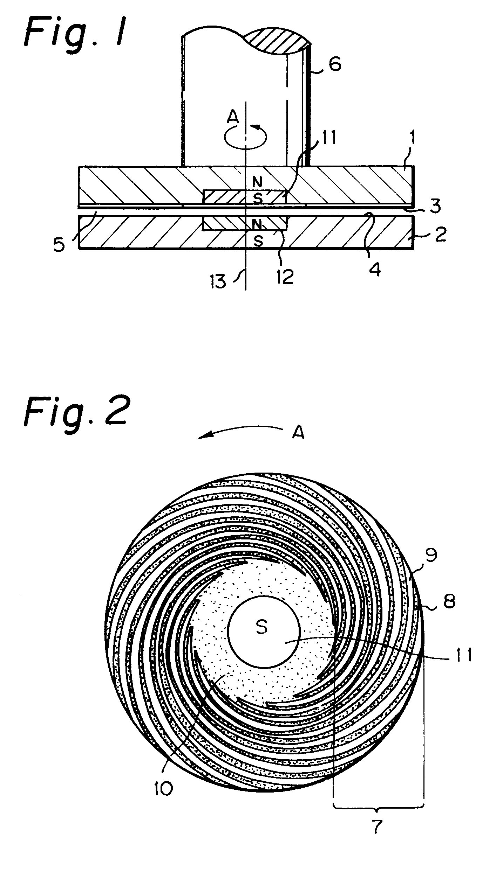

Referring to Figs. 1 and 2, there is shown a thrust bearing constructed according to the present invention.

In Fig. 1, a disc member 1 is attached to an end of a rotatable shaft 6 and a stationary member 2 is disposed in opposing relation to the disc member 1. Each of the opposing surfaces 3 and 4 of both members 1 and 2 is finished to have a flat and smooth mirrored surface having undulation of under 1 μm and a pattern of spiral groove is provided on either of the surfaces. In the illustrated embodiment, the pattern is formed on the surface 3 as shown in Fig. 2. The pattern is formed in an outer annular zone 7 on the surface 3 so as to provide unidirectional spiral grooves 8 and spiral lands 9 between adjacent grooves, the surfaces of the lands 9 being the original surface 3 which remains after formation of the grooves 8. Such spiral pattern or spiral grooves may be formed by shot blasting of Alumina particles on the surface 3 through a masking pattern applied thereon, the grooves 8 being formed to have a depth of 3 - 50 μm.

The material for the surface 3 on which the spiral grooves 8 are formed is preferably selected from ceramics such as SiC, $Si_3N_4$, $Al_2O_3$ or the like. The material for the surface 4 on which no groove is formed and which is kept flat is preferably selected from ceramics such as SiC, $Si_3N_4$ or $Al_2O_3$ etc., stainless steel, super hard alloy or hard metal (such as a cobalt based compound comprising by weight 20% Cr, 20% Mo, 4% Si with the balance Co). The combination of materials for both the surfaces 3 and 4 is determined by taking into account the thrust load and the intended operating circumstances. If both surfaces are made of ceramics, such a bearing would be applicable to a wide range of circumstances and may withstand high load. If the bearing is to be used within liquid containing chlorine ion, it is preferable to employ the hard metal referred to above.

On the surfaces 3 and 4, magnet pieces 11 and 12 are embedded in the central zones of the surfaces, respectively, so that their poles (NS) are disposed parallel to an axis 13 of the shaft 6. Due to the arrangement of the magnet pieces as illustrated in Fig. 1, the magnet pieces 11 and 12 align and attract each other by their magnetic force. Accordingly, the spiral member 1 and the stationary member 2 will keep alignment when a radial load within the limit of magnetic force is applied to the shaft 6.

As materials suitable for the magnet pieces 11, 12, any known material may be utilized such as ferrite or rare earth elements.

In Fig. 2, a central zone 10 is shown as having been shot blasted to a depth equal to that of the grooves 8. The portions for receiving the magnets 11 and 12 are pre-formed as dents at the time of fabrication of the members 1 and 2 such as during the sintering process for the ceramics.

With the construction above, when the shaft is rotated in the direction A shown in Figs. 1 and 2, fluid dynamic pressure is induced between the surfaces 3 and 4 due to the rotation of the spiral grooves 9 relative to the flat surface 4 by introducing fluid 5 into the grooves. Also, due to the presence of magnet pieces 11 and 12, the alignment of the members 1 and 2 is maintained. The fluid 5 may be surrounding fluid. However, any fluid may be employed such as air, water, sea water or oil etc. depending on the degree of load imposed on the bearing. If the bearing is used within liquid, such as in the case of a submersible rotating device, the surrounding liquid may be used as the fluid 5. In a case where the bearing is used within a vacuum, an oil having a high boiling temperature or a magnetic liquid is used as the fluid 5.

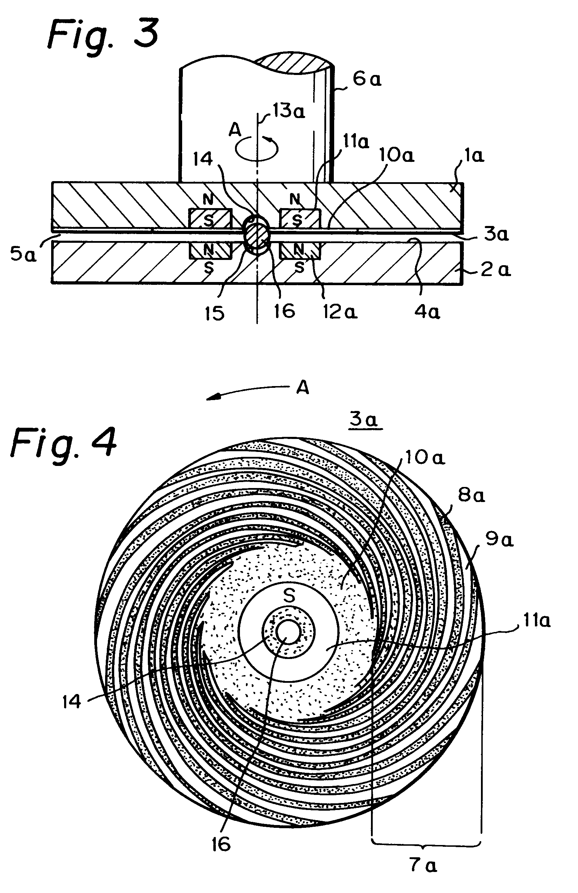

In Figs. 3 and 4, another embodiment according to the present invention is shown. In this embodiment, the same reference numerals as those used in Figs. 1 and 2 are employed, with the suffix "a" added respectively thereto, for those elements which are similar to those in Figs. 1 and 2. The respective functions of the elements are the same as those in Figs. 1 and 2 having the same reference numerals without the suffix "a".

It is to be noted that in this embodiment the magnet pieces 11a and 12a are formed with an annular shape. Further, on the surfaces 3a and 4a, semi-spherical dents 14 and 15 are formed at the central portion so that a space is formed between the surfaces 3a and 4a for receiving a small spherical element 16 therein. The element 16 is preferably made of hard material such as steel, ceramics, super hard alloy, etc. so that this bearing may withstand a somewhat larger radial load (in combination with the magnetic forces) than that withstood in the embodiment shown in Figs. 1 and 2. The shape of the element 16 is not limited to that of a perfect sphere and may take another shape such as cylindrical or conical (at both ends), etc. Depending on the configuration of the element 16, the depth and shape of the dents 14 and 15 are appropriately determined. The size of the element 16 is determined such as not to physically separate the surfaces 3a and 4a, in other words, the dimension of the element 16 in the axial direction is slightly smaller than the axial dimension of the space formed by the dents 14 and 15 when the two surfaces 3a and 4a contact each other. Since the radial load in this case is borne by the combination of the element 16 and the dents 14 and 15, the arrangement of the magnetic poles of the pieces 11a and 12a may not necessarily be similar to the arrangement shown in Figs. 1 and 2. The poles N, S may be arranged to effect either attraction or repulsion, but in either case the axis of NS must be parallel to the axis 13a of the shaft 6a. However, in a case where the element 16 is spherical, it would be preferable to arrange the poles such as to utilize the attraction between the magnet pieces 11a and 12a. In this second embodiment, the fluid 5a may be air, liquid, magnetic fluid, etc. This bearing may also be used within slurry.

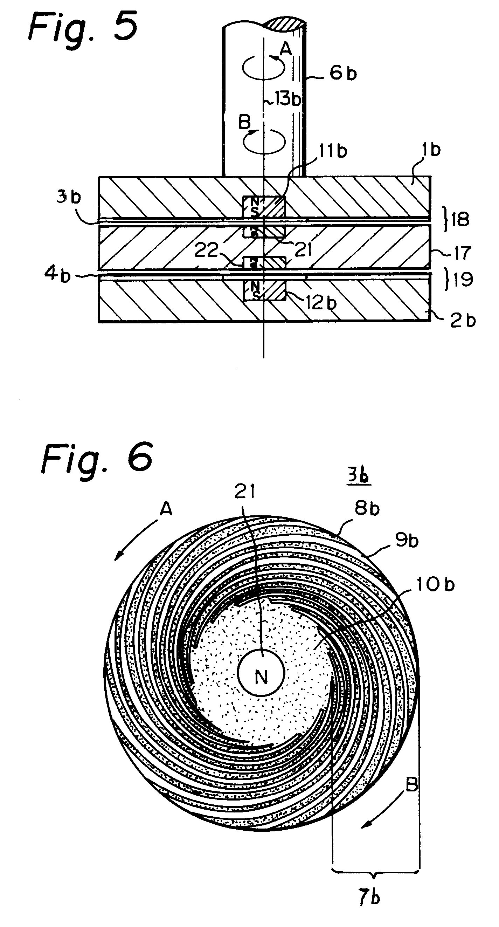

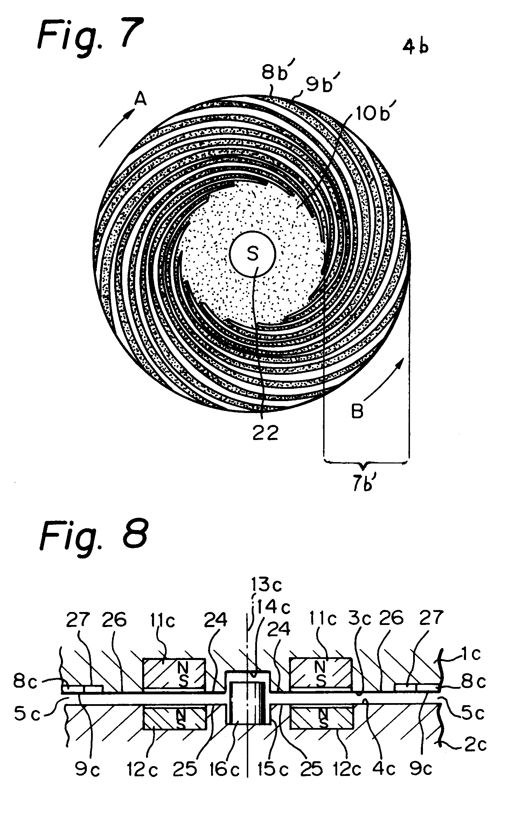

A third embodiment of the present invention is shown in Figs. 5, 6 and 7. The same reference numerals as those used in Figs. 1 and 2 are employed with the suffix "b" or "b'" added thereto in order to indicate elements whose function is similar to those in Figs. 1 and 2 having no suffix "b" or "b'". In this third embodiment, an intermediate disc plate 17 is employed between a disc member 1b secured at the end of a shaft 6b and a stationary member 2b. In this particular embodiment, spiral patterns are formed at one side surface (3b, 4b) of each sliding portion 18 and 19 as shown in Figs. 6 and 7, respectively. Also, magnet pieces 21 and 22 are embedded on the upper and lower surfaces of the intermediate disc member 17.

In this case, the arrangement of the poles NS of magnet pieces 11b, 21 , 22 and 12b is made such as to effect attraction at the respective locations while they are magnetized in the direction parallel to an axis 13b of a shaft 6b. This third embodiment is provided with two sliding portions 18 and 19 between a member 1b and the disc member 17 and between the disc member 17 and a stationary member 2b, respectively. The construction of this third embodiment permits the rotation of the shaft 6b in both directions A and B due to the different directions provided of the spiral patterns at the surfaces 3b and 4b. When the shaft 6b is rotated in the direction A, positive dynamic fluid pressure is generated at the sliding portion 18 while negative dynamic fluid pressure is generated at the sliding portion 19 so that the disc member 17 and the member 2b serve as a stationary means in combination relative to the rotating member 1b due to the negative pressure in the portion 19. On the other hand, when the shaft 6b is rotated in the direction B, the negative pressure will be generated at the portion 18 so that the disc member 17 will rotate together with the member relative to the stationary member 2b. In this third embodiment, it is also possible to employ a small element similar to the sphere element 16 shown in Figs. 3 and 4. Such installation of a small element similar to the element 16 is also effected in a manner similar to that explained with respect to the second embodiment.

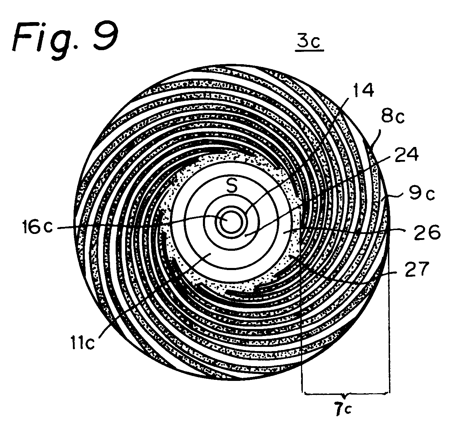

A fourth embodiment of the present invention is illustrated in Figs. 8 and 9. In this embodiment, elements or portions similar to those shown in Figs. 3 and 4 are given the same reference numerals with the suffix "c" added thereto respectively. In this embodiment, the small element 16c is made in a cylindrical shape and thus dents 14c and 15c are formed cylindrically. Radially outwardly and inwardly of an annular magnet piece 11c embedded on the surface 3c are provided annular land portions 26 and 24 which have the same height as the lands 9c, and outwardly of the annular land portion 26 is provided an annular groove 27 which communicates with all of the spiral grooves 8c so as to equalize the fluid dynamic pressure generated in the grooves 8c between the surfaces 3c and 4c. The annular land portions 26 and 24 serve to protect magnet pieces and the central piece 16c from being damaged by foreign materials. This arrangement is also applicable to the foregoing embodiments. In this embodiment, if the axial length of the element 16c is nearly equal to but less than the axial distance of the space formed by dents 14c and 15c, it may serve to suppress possible vibration at the bearing.

As explained hereinbefore, the bearing according to the present invention is simple in construction and does not give rise to any need for an increase in space, and it may be used within air, liquid or vacuum (with use of an oil having a high boiling point). Also, the friction loss is quite low and, therefore, cooling for the bearing is made easy, quite simple or substantially unnecessary.

In the present invention, the aligning means employed such as a small piece received in a space formed by dents on the opposing surfaces and magnet pieces, are located centrally within the spiral pattern provided in an outer annular zone. Thus these means are remote from the outside of the bearing and therefore the magnet pieces are hardly affected by corrosion or wear.

In the illustrated embodiments, apart from the third embodiment, the bearing has the spiral grooves provided on the rotatable side. However, such condition is not a mandatory requirement and, as evidenced in the third embodiment, the only essential requirement on this point is that either one of the opposing surfaces is given a spiral pattern while the other is made flat.

**Claims**

1. A thrust bearing comprising:
   a disc member (1, 1a, 1b, 1c) secured to a rotatable shaft (6, 6a, 6b,) and provided with a flat surface (3, 3a, 3b, 3c) at the side opposite said shaft;
   a flat member (2, 2a, 2b, 2c) having a flat surface (4, 4a, 4b, 4c) opposing said flat surface of said disc member;
   a pattern of spiral grooves (8, 8a, 8b, 8c) formed in an outer annular region (7, 7a, 7b, 7c) on either one of said flat surfaces; and
   means for maintaining the alignment of said disc member and said flat member, characterized in that
   said means are magnet pieces (11, 11a, 11b, 11c; 12, 12a, 12b, 12c) embedded in the two opposing surfaces centrally within said annular region so as to exhibit magnetic force therebetween.

2. A thrust bearing as claimed in claim 1 wherein a second disc member (17), with opposing surfaces both of which are flat and parallel to each other, is disposed, such as to be sandwiched between said disc member (1b) and said flat member (2b), a second pattern of spiral grooves (8b') is formed in the other of said flat surfaces (3b, 4b), the direction of said second pattern of spiral grooves on the surface being reverse to that of the other; and additional means for maintaining the alignment of said disc member is provided, said additional means being additional magnet pieces (21, 22), which are embedded in the two opposing surfaces of said second disc member and centrally within said annular region (7b, 7b').

3. A thrust bearing as claimed in claim 1 or 2 wherein each of said magnet pieces (11a, 12a; 11c, 12c) is formed with an annular shape identical with each other in size.

4. A thrust bearing as claimed in claim 1 or 2 or 3 wherein magnetic liquid is present between the opposing flat surfaces.

5. A thrust bearing as claimed in claim 3 or 4 wherein said means for maintaining alignment also comprises a small piece made of hard material (16, 16c) and a dent (14, 14c, 15, 15c) provided centrally on each of said flat surfaces so as to form in combination a space for receiving said small piece.

6. A thrust bearing as claimed in claim 5 wherein said small piece is a sphere (16) and said dent is a semi-spherical dent (14, 15).

7. A thrust bearing as claimed in anyone of claims 1 to 6 wherein an annular land (26) is provided on the surface having said pattern for surrounding said magnet piece on said surface, the height of said land being equal to the height of the lands of said pattern.

8. A thrust bearing as claimed in claim 5 or 6 wherein an inner annular land (24) is provided on the surface having said pattern such as to surround said dent and to inwardly border said magnet piece and an outer annular land (26) is provided on the same surface such as to surround said annular magnet piece, the height of said inner and outer lands being equal to the height of the lands of said pattern.

**Patentansprüche**

1. Ein Axial- oder Schublager, welches folgendes aufweist:
ein Scheibenglied (1,1a,1b,1c) befestigt an einer drehbaren Welle (6,6a,6b) und Versehen mit einer flachen Oberfläche (3,3a,3b,3c) an der Seite entgegengestzt zur Welle;
ein flaches Glied (2,2a,2b,2c) mit einer flachen Oberfläche (4,4a,4b,4c) im Gegensatz zur flachen Oberfläche des Scheibenglieds;
ein Muster aus Spiralnuten (8,8a,8b,8c) geformt in einer äußeren, ringförmigen Region (7,7a,7b,7c) auf einer der flachen Oberflächen; und
Mittel zum Aufrechterhalten der Ausrichtung des Scheibenglieds und des flachen Glieds dadurch gekennzeichnet, daß
die erwähnten Mittel Magnetteile (11,11a,11b,11c;12,12a,12b,12c) sind eingebettet in den beiden entgegengesetzten Oberflächen mittig innerhalb der ringförmigen Region, um so Magnetkraft dazwischen vorzusehen.

2. Axiallager nach Anspruch 1, wobei folgendes vorgesehen ist: ein zweites Scheibenglied (17) mit entgegengesetzt liegenden Oberflächen, die beide flach und parallel zueinander verlaufen, wobei dieses zweite Scheibenglied derart angeordnet ist, daß es sandwichartig zwischen dem erwähnten Scheibenglied (1b) und dem erwähnten flachen Glied (2b) liegt, wobei ferner ein zweites Muster aus Spiralnuten (8b') in der anderen der flachen Oberlfächen (3b,4b) ausgeformt ist, und zwar mit der Richtung des zweiten Musters der Spiralnuten auf der Oberfläche umgekehrt zu der des anderen Musters, und wobei schließlich zusätzliche Mittel vorgesehen sind zur Aufrechterhaltung der Ausrichtung des Scheibengliedes, wobei die zusätzlichen Mittel zusätzliche Magnetteile (21,22) sind, die in den beiden entgegengesetzt liegenden Oberflächen des zweiten Scheibenglieds eingebettet sind, und zwar mittig innerhalb der Ringregion (7b,7b').

3. Axiallager nach Anspruch 1 oder 2, wobei jeder der Magnetteile (11a,12a; 11c,12c) mit einer Ringform größenmäßig identisch miteinander ausgebildet ist.

4. Axiallager nach Anspruch 1 oder 2 oder 3, wobei zwischen den entgegengesetzt liegenden flachen Oberflächen magnetische Flüssigkeit vorhanden ist.

5. Axiallager nach Anspruch 3 oder 4, wobei die Mittel zur Aufrechterhaltung der Ausrichtung ein kleines Teil aus Hartmaterial (16,16c) aufweisen und wobei eine Vertiefung (14,14c;15,15c) mittig auf jeder der flachen Oberflächen vorgesehen ist, um so in Kombination einen Raum zur Aufnahme des kleinen Teils zu bilden.

6. Axiallager nach Anspruch 5, wobei der kleine Teil eine Kugel (16) ist und die Vertiefung eine halbkugelförmige Vertiefung (14,15) ist.

7. Axiallager nach einem der Ansprüche 1 bis 6, wobei ein ringförmiger Steg (26) auf der Oberfläche mit dem Muster vorgesehen ist, um den Magnetteil auf der Oberfläche zu umgeben, wobei ferner die Höhe des Stegs gleich der Höhe der Stege des Musters ist.

8. Axiallager nach Anspruch 5 oder 6, wobei ein innerer Ringsteg (24) auf der Oberfläche mit dem Muster derart vorgesehen ist, daß die Vertiefung umgeben wird und um nach innen an dem Magnetteil anzugrenzen, und wobei ferner ein äußerer Ringsteg (26) auf der gleichen Oberfläche derart vorgesehen ist, daß der ringförmige Magnetteil umgeben wird, wobei die Höhe der inneren und äußeren Stege gleich der Höhe der Stege des Musters ist.

**Revendications**

1. Palier de butée comprenant :
   - un organe formant disque (1,1a,1b,1c) fixé sur un arbre rotatif (6,6a,6b) et muni d'une surface plane sur le côté opposé à l'arbre ;
   - un organe plat (2,2a,2b,2c) ayant une surface plane (4,4a,4b,4c) en regard de la surface plane de l'organe formant disque ;
   - un réseau de rainures en spirale (8,8a,8b,8c) formé sur une région annulaire extérieure (7,7a,7b,7c) de l'une ou l'autre des surfaces planes ; et
   - des moyens pour maintenir l'alignement de l'organe formant disque et de l'organe plat, caractérisé en ce que
     ces moyens sont des morceaux d'aimant (11,11a, (11,11a,11b,11c;12,12a,12b,12c) encastrés dans les deux surfaces en regard, au centre et à l'intérieur de la région annulaire, de manière à produire des forces magnétiques dans cette interface.

2. Palier de butée selon la revendication 1, dans lequel un second élément formant disque (17), muni de deux surfaces opposées qui sont chacune planes et parallèles l'une avec l'autre, est disposé, en sandwich, entre ledit organe formant disque (1b) et ledit organe plat (2b), un second réseau de rainures en spirale (8b') est formé sur l'autre des surfaces planes (3b,4b), la direction du second réseau de rainures en spirale sur la surface étant opposée à celle de l'autre ; et des moyens supplémentaires pour maintenir l'alignement de l'élément formant disque sont pourvus, lesdits moyens supplémentaires étant des morceaux d'aimant (21,22) supplémentaires, qui sont encastrés dans les deux surfaces opposées du second organe formant disque au centre et à l'intérieur de la région annulaire (7,7b').

3. Palier de butée selon la revendication 1 ou 2, dans lequel chaque morceau d'aimant (11a,12a;11c,12c) est fabriqué de manière à avoir une forme annulaire de taille identique pour tous.

4. Palier de butée selon la revendication 1 ou 2 ou 3, dans lequel un liquide magnétique est présent entre les surfaces planes en regard.

5. Palier de butée selon la revendication 3 ou 4, dans lequel les moyens pour maintenir l'alignement comprennent en outre une pièce petite fabriquée dans un matériau dur (16,16c) et un évidement (14,14c,15,15c) pourvu au centre de chaque surface plane de manière à former, en étant combiné avec un autre, un espace pour recevoir la pièce petite.

6. Palier de butée selon la revendication 5, dans lequel la pièce petite est une sphère (16) et l'évidement est un évidement semi sphérique (14,15).

7. Palier de butée selon l'une quelconque des revendications 1 à 6, dans lequel une zone annulaire (26) est pourvue à la surface comportant le réseau pour entourer le morceau d'aimant sur la surface, la hauteur de la zone étant égale à la hauteur des nervures du réseau.

8. Palier de butée selon la revendication 5 ou 6, dans lequel une zone annulaire intérieure (24) est pourvue sur la surface ayant le réseau de manière à entourer l'évidement et à border vers l'intérieur le morceau d'aimant et une zone annulaire extérieure (26) est pourvue sur la même surface de manière à entourer le morceau d'aimant annulaire, la hauteur des zones intérieure et extérieure étant égale à la hauteur des nervures du réseau.

*Fig. 1*

*Fig. 2*

*Fig. 3*

*Fig. 4*

## Fig. 5

## Fig. 6

Fig. 7

Fig. 8

## Fig. 9